Europäisches Patentamt

European Patent Office

Office européen des brevets

(19)

(11) Numéro de publication: **0 064 438**

**A1**

(12) # DEMANDE DE BREVET EUROPEEN

(21) Numéro de dépôt: **82400694.4**

(22) Date de dépôt: **16.04.82**

(51) Int. Cl.³: **G 11 B 7/08**
**G 11 B 7/00**

---

(30) Priorité: **27.04.81 FR 8108340**

(43) Date de publication de la demande:
**10.11.82 Bulletin 82/45**

(84) Etats contractants désignés:
**DE GB IT NL SE**

(71) Demandeur: THOMSON-CSF
173, Boulevard Haussmann
F-75379 Paris Cedex 08(FR)

(72) Inventeur: Malissin, Roland
THOMSON-CSF SCPI 173, bld Haussmann
F-75360 Paris Cedex 08(FR)

(74) Mandataire: Lepercque, Jean et al,
THOMSON-CSF SCPI 173, Bld Haussmann
F-75379 Paris Cedex 08(FR)

---

(54) **Dispositif d'enregistrement-lecture comprenant un support mobile d'information du type comportant une piste prégravée.**

(57) L'invention se rapporte aux systèmes de reproduction de signaux à partir d'un support mobile du type comportant une piste de prégravure (21). Une deuxième piste (22) parallèle à cette piste de prégravure (21) reçoit les informations de service et les informations utiles. Selon l'invention, l'asservissement de la tête d'enregistrement-lecture s'effectue sur l'une ou l'autre de ces pistes en fonction de la détection d'une présence ou d'une absence de signal d'informations sur cette deuxième piste.

Application notamment à l'enregistrement-lecture d'un disque optique.

./...

FIG.1

# DISPOSITIF D'ENREGISTREMENT-LECTURE COMPRENANT UN SUPPORT MOBILE D'INFORMATIONS DU TYPE COMPORTANT UNE PISTE PREGRAVEE

La présente invention concerne un dispositif d'enregistrement-lecture comprenant un support mobile d'informations du type comportant une piste prégravée.

Lorsque l'on veut stocker de l'information, on peut utiliser un support, un disque par exemple, et effectuer dans ce cas une gravure de ce disque suivant une piste en spirale ou suivant des cercles concentriques.

Lorsque la densité de l'information s'élève, il est nécessaire de recourir à un dispositif d'enregistrement permettant d'obtenir une très grande stabilité radiale : en effet dans un tel cas, un pas de spirale de l'ordre de 1 µm doit être maintenu avec une précision de l'ordre de 0,1 µm. On peut alors considérer deux possibilités :

Si l'on veut diffuser à un très grand nombre d'exemplaires un programme pré-établi, il est connu d'utiliser une machine coûteuse et non transportable permettant par sa précision mécanique propre d'obtenir, lors de la gravure de l'information sur disque "maître", le résultat recherché.

Si l'on veut enregistrer un disque unique, ou éventuellement quelques disques, avec des machines pouvant être la propriété de très nombreux utilisateurs ayant chacun une information propre à stocker, à compléter éventuellement en permanence, il est connu d'utiliser une machine de prix plus réduit, plus légère ; cette machine permet d'obtenir la stabilité radiale requise au moyen d'une piste prégravée portée par le disque maître, sur lequel l'information doit être enregistrée ; piste sur laquelle on s'asservit radialement.

Suivant les utilisations possibles du disque, l'information peut être enregistrée de façon continue ou par séquences jointives, ou au contraire elle doit être enregistrée par domaines élémentaires de petite taille dans un ordre non prévisible à l'avance.

Dans tous les cas considérés le signal obtenu, à partir de la piste prégravée que l'on appellera à partir de maintenant "prégravure" est présent en même temps que le signal de l'information que l'on appellera "postgravure".

Dans les méthodes de l'art connu utilisant un disque "maître" avec "prégravure", on s'asservit radialement sur la "prégravure" et l'on effectue la "postgravure" sur la piste prégravée. La "prégravure" sert pour l'asservissement radial aussi bien lors de la "postgravure", que lors d'une relecture ultérieure du disque.

En principe, il est possible de choisir les caractéristiques physiques de gravure de la "prégravure" et de la "postgravure" pour que ces signaux n'interfèrent pas de façon gênante. Mais en raison d'autres contraintes ou à cause d'imperfections matérielles du disque et de l'enregistreur, le fait de se placer rigoureusement dans de telles configurations physiques peut devenir irréalisable. Dans ces conditions le signal de "postgravure" peut perturber le signal de "prégravure" et empêcher un asservissement radial correct.

Le dispositif de l'invention permet de s'asservir radialement de façon satisfaisante que ce soit durant une période d'enregistrement de la "postgravure" ou durant une période de relecture du disque postgravé.

Il utilise, en effet, comme piste de référence soit la piste de "prégravure", soit une deuxième piste située entre les zones adjacentes de la piste de "prégravure" et portant l'information utile ou "postgravure". Avant d'effectuer la "postgravure", cette piste est soit une piste purement virtuelle, soit une piste matérialisée de place en place par des signaux de service.

L'invention a pour objet un dispositif d'enregistrement-lecture d'informations utilisant un support mobile d'informations comportant une piste prégravée sur laquelle sont enregistrées des signaux d'asservissement radial et au moins une deuxième piste parallèle à cette première piste ; cette deuxième piste étant destinée à enregistrer des signaux d'informations, caractérisé en ce qu'il comprend au moins un moyen de détection de piste permettant de lire la piste prégravée et la deuxième piste, un moyen de commutation commandé par l'existence de signaux présents sur cette deuxième piste sélectionnant les signaux délivrés par les moyens de détection de piste lors de la détection des signaux présents sur cette deuxième piste, lesdits signaux sélectionnés étant transmis aux moyens d'asservissement radial d'un ensemble d'enregistrement-lecture desdits signaux d'informations.

L'invention sera mieux comprise au moyen de la description ci-après et des figures annexées parmi lesquelles :

- la figure 1 est une vue isométrique du support d'information selon l'invention et de son dispositif optique de lecture ;

- les figures 2 et 3 représentent différentes configurations de gravure de ce support ;

- les figures 4 à 8 représentent diverses possibilités de positionnement des taches optiques par rapport aux pistes du support ;

- la figure 9 illustre deux courbes de réponse d'un interrupteur de voies ;

- les figures 10 à 13 représentent quatre schémas électroniques de l'asservissement radial.

La présente invention concerne un dispositif permettant dans le cas d'un disque optique de s'asservir radialement de façon satisfaisante, que ce soit durant une période d'enregistrement de la "postgravure", ou durant une période de relecture du disque postgravé. Elle concerne aussi la configuration du disque "maître" servant à enregistrer l'information.

Dans le cas de la présente invention, le signal de "prégravure" et le signal de "postgravure" ne sont pas enregistrés sur une même piste ; qu'il s'agisse de bras de spirale ou de cercles concentriques. Ils sont enregistrés sur deux pistes voisines. Ce peut être, par exemple, sur deux bras voisins d'une spirale à deux bras ou sur deux cercles appartenant à des groupes de deux cercles concentriques successifs. Les pistes de "prégravure" et de "postgravure" servent successivement de pistes de guidage.

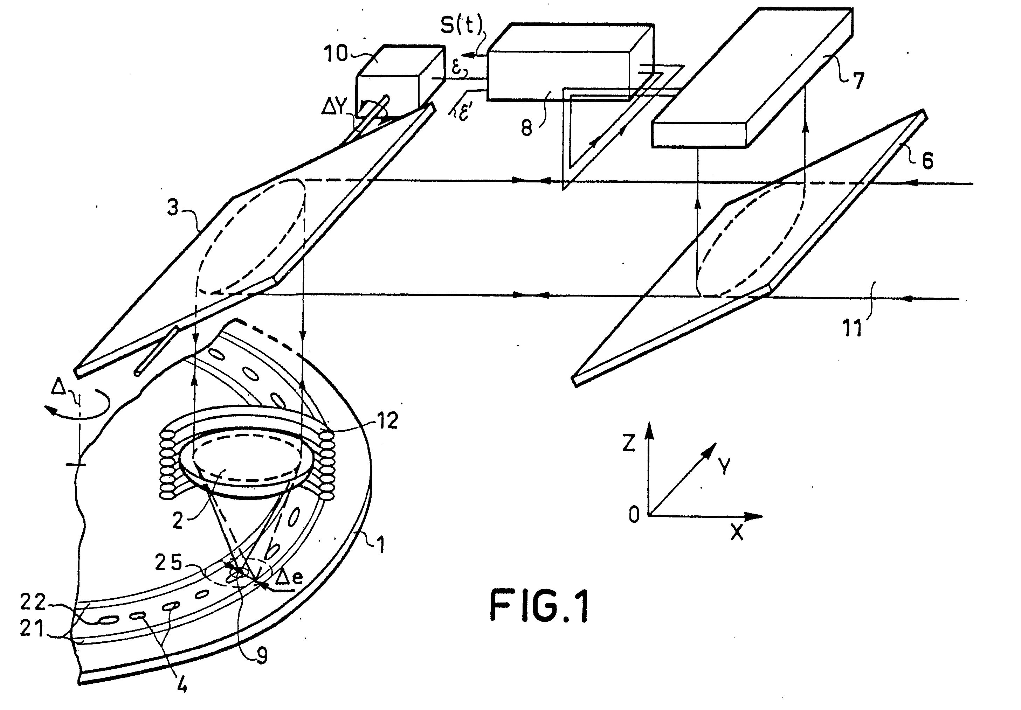

La figure 1 représente un support d'information 1 en forme de disque pouvant tourner dans son plan autour d'un axe Δ. La face inférieure de ce disque est ici supposée lisse ; la face supérieure qui lui est parallèle est également lisse, mais comporte une suite d'éléments diffractants 4 de phase ou d'amplitude disposés suivant les spires d'une piste. Chacun de ces éléments 4 a pour contour une plage de forme plus ou moins allongée dont la largeur sensiblement constante est de l'ordre du micron ou inférieure.

4

En ce qui concerne la gravure du disque, l'insolation de la couche sensible servant à l'inscription est effectuée par un faisceau d'énergie radiante focalisé dont l'intensité est modulée par un signal électrique en créneaux de largeur variable qui constitue le support de l'information. L'incorporation de l'information dans le signal modulateur est effectuée selon les cas, par modulation de fréquence ou de phase ou par tout mode de codage capable de fournir un message codé par impulsions ; l'information peut aussi être elle-même le signal modulateur.

Sur cette figure 1, on considère un disque rigide 1 lu par réflexion. On peut ainsi utiliser un disque rigide mais il est également possible d'envisager d'utiliser un disque souple. Bien entendu, la forme du support 1 n'est nullement limitative et l'on pourrait envisager utiliser un support en forme de ruban comportant une ou plusieurs pistes rectilignes.

Ce dispositif de la figure 1 permet l'accès à l'une des pistes d'un support d'information et notamment à une piste prédéterminée d'un disque. Ce dispositif décrit à titre d'exemple non limitatif concerne plus particulièrement un système optique enregistreur-lecteur dont la tête de lecture est mobile parallèlement à un rayon du disque support d'information. On peut utiliser un tel disque soit pour inscrire des informations en un point déterminé d'une piste lisse inscrite au préalable, soit pour lire des informations inscrites en un point quelconque de cette piste. Le disque est animé d'un mouvement de rotation communiqué par un moteur d'entrainement solidaire du chassis du système optique d'enregistrement-lecture. Le dispositif d'accès a une piste prédéterminée du disque comprend une partie fixe constituée par les sources d'énergie radiante et une partie mobile constituée par la tête d'enregistrement-lecture. Cette dernière comprend un objectif 2 du type microscope, solidaire, par exemple, d'une bobine électrodynamique 12 se déplaçant dans le champ magnétique d'un aimant permanent assurant l'asservissement vertical et un miroir galvanométrique 3 dont le pivotement autour d'un axe ΔY assure l'asservissement radial. Les sources d'énergie radiante, comme il est également connu, comprennent des sources lasers, par exemple des lasers à gaz He-Ne. Ces lasers délivrent un faisceau parallèle polarisé. La section de ce faisceau est très faible. Le faisceau laser doit être élargi et collimaté de façon à recouvrir la pupille d'entrée de l'objectif quelle que soit la position radiale de la tête de lecture ; on intercale donc, entre les sources d'énergie radiante et la tête d'enregistrement-lecture mobile une optique de type afocal.

Pour la lecture, un faisceau laser parallèle et polarisé, produit par une source laser, est élargi à l'aide du système afocal dont le grossissement est tel que le faisceau émergent, également parallèle, recouvre la pupille d'entrée de l'objectif 2. Le miroir de renvoi 3 inséré entre ce système afocal et l'objectif 2 dévie dans une direction radiale les rayons reçus parallèlement à l'axe de rotation du disque. L'objectif 2 focalise le faisceau de lecture au point 9 sur le disque support d'information 1. Ce disque est animé d'un mouvement de rotation. L'objectif et le miroir sont solidaires de l'équipage mobile constituant la tête d'enregistrement-lecture.

Ce dispositif dissociant les sources lumineuses de la tête d'enregistrement-lecture proprement dite, permet de réduire la masse de l'équipage et d'obtenir ainsi des temps d'accès réduits.

Dans la mesure où il est prévu d'enregistrer des signaux, on peut utiliser le même système afocal pour le faisceau d'enregistrement ; ce faisceau ayant été préalablement modulé comme dans les enregistreurs-lecteurs classiques.

On interpose sur le faisceau 11, entre la source et le miroir 3, une lame semi-transparente 6 qui permet de dévier le faisceau réfléchi par le disque vers des moyens photodétecteurs 7. A la sortie de ces moyens photodétecteurs 7, un circuit 8 de traitement du signal peut délivrer un signal d'erreur $\varepsilon$, correspondant à l'écart de focalisation $\Delta e$, qui permet de commander le moteur 10 en réalisant ainsi un asservissement radial, ainsi qu'un signal d'erreur $\varepsilon'$ qui permet de commander la bobine 12 en réalisant ainsi un asservissement de focalisation. Ce circuit de traitement 8 peut délivrer aussi un signal $S(t)$ qui traduit fidèlement les variations temporelles du signal enregistré sur la piste considérée.

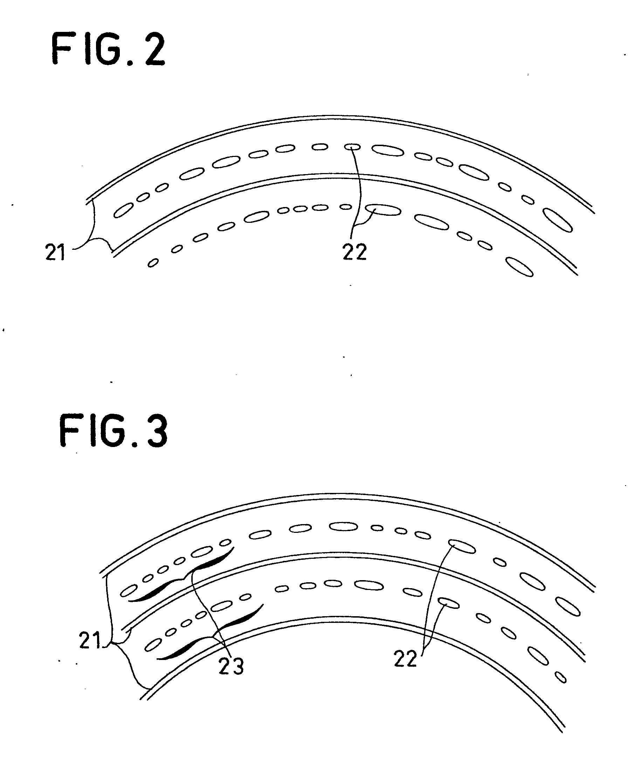

Comme représenté aux figures 2 et 3, le disque comporte deux types de pistes : "prégravure" 21 et "postgravure" 22, et éventuellement des signaux de service prégravés 23 qui peuvent exister aussi sur cette piste de postgravure 22.

La piste de "prégravure" 21 est par exemple une piste lisse ; une piste lisse étant une piste de guidage ne comportant pas d'information, c'est à dire ni signaux de service ni information utile. L'information utile est l'information que l'on désire enregistrer pour pouvoir ensuite la relire. Cette piste de "prégravure" lisse est lue à l'aide de la composante continue et des composantes basse fréquence des signaux qu'elle fournit. On appellera, donc ces signaux, signaux Basse Fréquence (BF), en opposition aux signaux d'information que l'on appellera par simplification signaux Haute Fréquence (HF).

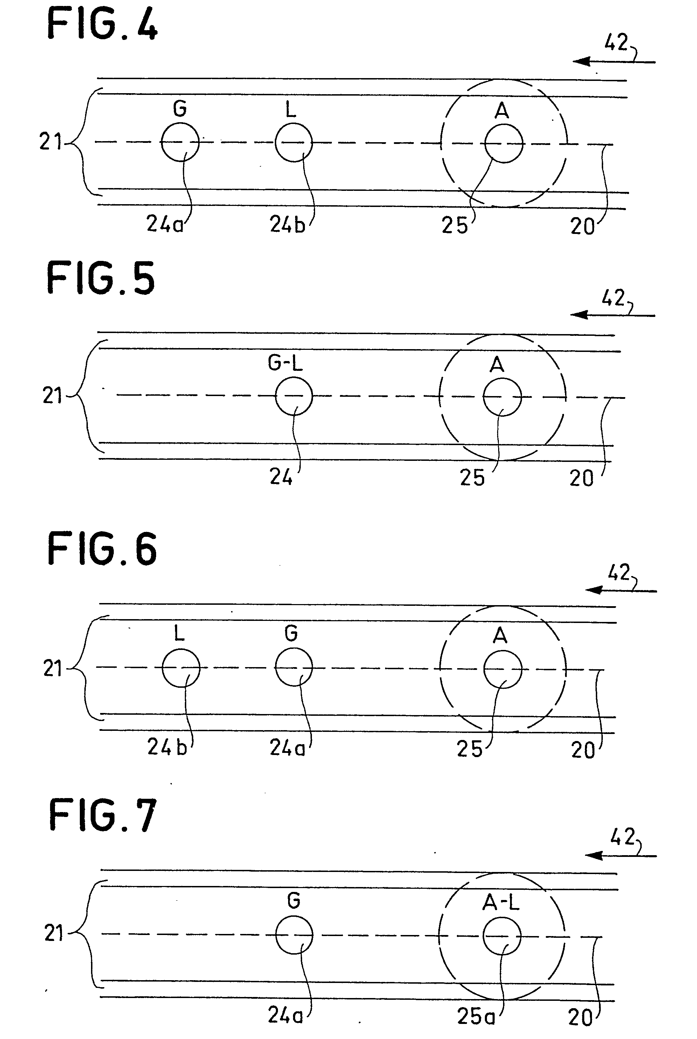

On considère trois faisceaux d'énergie radiante 24a, 24b et 25. Comme illustré à la figure 4, le faisceau 24a correspond à la gravure (G) et le faisceau 24b à la lecture (L) des informations utiles. Le faisceau 25 est un faisceau que l'on appellera faisceau d'asservissement (A). A chaque faisceau correspond une tache de rayonnement sur le disque que l'on dénommera comme le faisceau qui lui correspond. A chacun des deux faisceaux d'énergie radiante 24b et 25 correspond un photodétecteur qui capte le faisceau après son interaction avec le disque et qui le transforme en signal électrique.

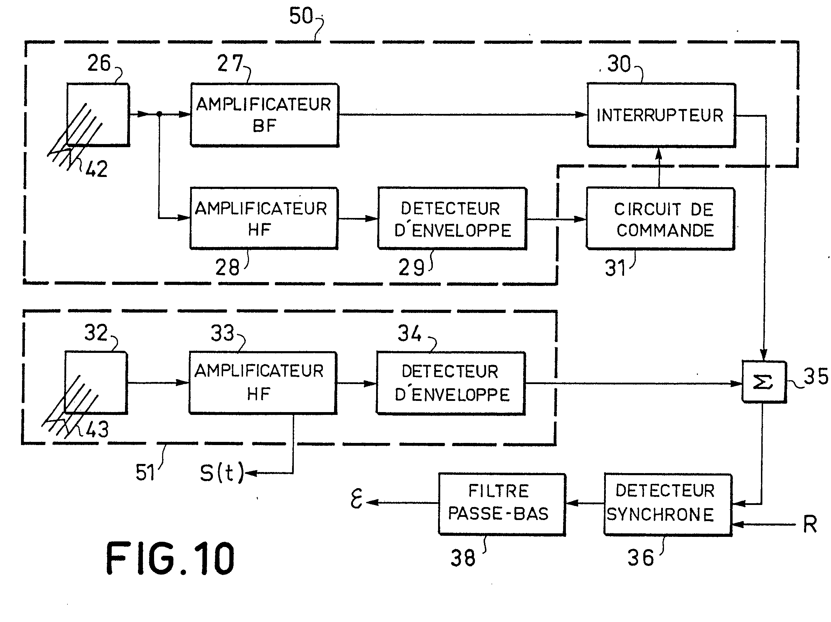

Dans la suite on parlera d'une voie lecture relative à la postgravure qui correspond au photodétecteur 32 captant le faisceau 24b suivi de circuits électroniques de mise en forme et de traitement, et d'une voie d'asservissement relative à la prégravure correspondant au photodétecteur 26 captant le faisceau 25 suivi de circuits électroniques de mise en forme et de traitement : Ces photodétecteurs 26 et 32 apparaissant dans les figures 10 à 13.

Sur la figure 4, on considère une piste de prégravure lisse 21, et une zone 20 réservée à la postgravure. Sur cette même figure la flèche 42 représente le sens de défilement de la piste par rapport aux taches : le disque dans son mouvement rencontre successivement et dans cet ordre la tache d'asservissement (A), puis la tache de lecture (L), enfin la tache de gravure (G).

Pour décrire le dispositif de l'invention, on se place, par exemple, dans le cas d'un asservissement par wobbulation. On considère tout d'abord comme illustré à la figure 4, les deux faisceaux d'asservissement 25 et de lecture 24b. La postgravure est lue par le centre des taches, la prégravure est lue par le bord de la tache 25 ; cette lecture par les bords de la tache 25 est symboliquement représentée par les deux cercles concentriques représentant la tache 25.

Sur la figure 10, la voie lecture 51 est branchée en permanence ; en l'absence de "postgravure" la voie lecture 51 ne fournit alors aucun signal, la voie asservissement 50 est branchée et fournit le signal d'asservissement radial.

Le signal obtenu à partir de la piste prégravée 21 est un signal BF ; après amplification 27 dans une première branche de traitement et passage par l'interrupteur 30 et le sommateur 35, il entre dans un détecteur synchrone 36 suivi par exemple d'un filtre passe-bas 38 qui délivre un signal d'erreur $\varepsilon$ représentatif du décentrement $\Delta e$ de la tête d'enregistrement-lecture par rapport à la piste. Ce signal permet la commande d'un moyen mécanique de positionnement radial de cette tête, représenté en 10 à la figure 1. Le signal R est un signal de référence pour la détection synchrone.

Si dans une zone de "postgravure" des information sont enregistrées, un signal HF est lu par le faisceau d'asservissement. Il subit dans une deuxième branche de traitement une amplification 28 et, après détection d'enveloppe 29, il fournit un signal de commande ouvrant l'interrupteur 30 en série dans la voie asservissement 50 par l'intermédiaire d'un circuit de commande 31. Ce circuit de commande 31 ne fournit un signal d'ouverture de l'interrupteur 30 que si le signal HF présente une durée supérieure à une certaine valeur et un niveau supérieur à un certain seuil.

Le signal HF de commande du servomécanisme radial n'est pas perturbé par la présence des pistes lisses voisines qui comportent essentiellement des composantes de signal à basse fréquence. Par contre le signal BF des pistes lisses est perturbé par la présence de la postgravure : suivant les types de disques "maîtres" utilisés, il peut apparaître sinon une inversion du signal d'asservissement radial en BF, du moins une perturbation de ce signal ; car une piste lisse et une piste de points présentent toutes les deux un spectre basse fréquence pouvant agir sur la voie BF du servomécanisme radial.

En présence du signal HF l'interrupteur 30 est ouvert ; l'enveloppe détectée en 34 du signal HF amplifié en 33, est envoyée vers le détecteur synchrone 36 suivi d'un filtre passe-bas 38. On obtient alors le signal ε de commande de servomécanisme radial. Le signal S(t) est le signal utile en lecture. Quand la "postgravure" disparaît, le signal HF s'évanouit, ne contribuant plus à l'asservissement. Simultanément la voie asservissement est alors reconnectée.

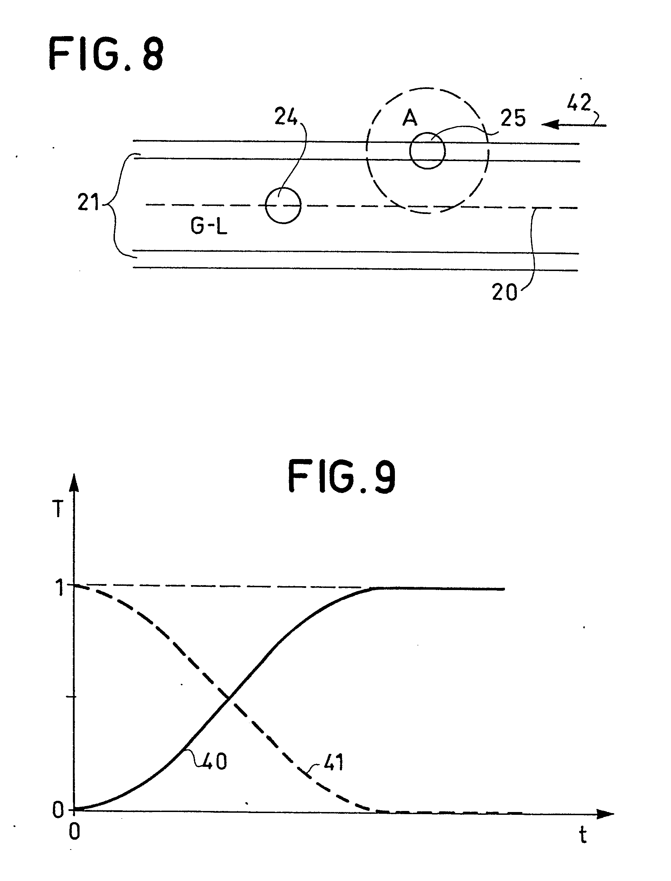

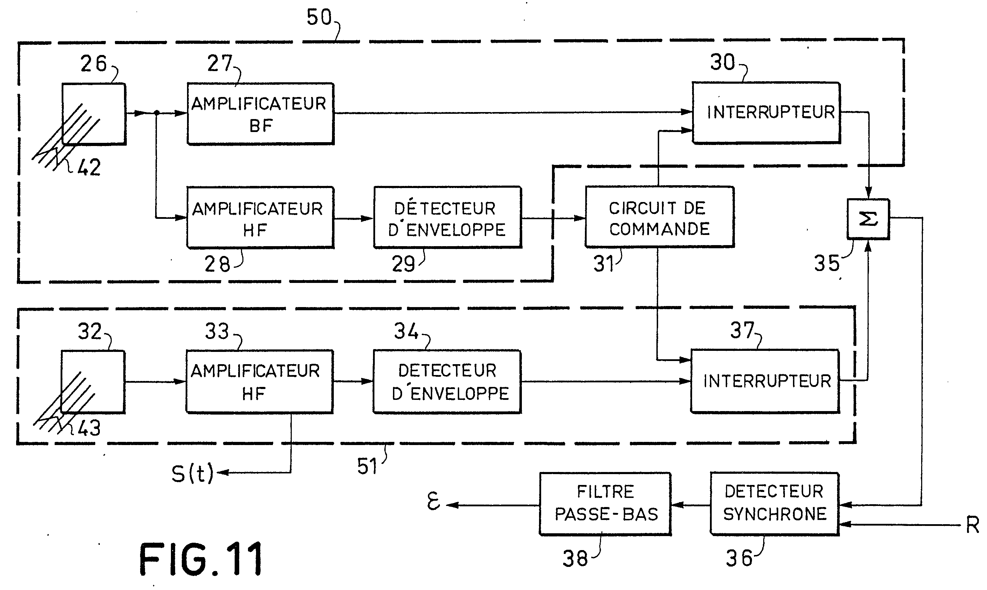

Dans le cas considéré à la figure 11 le circuit 31 commande en opposition les deux interrupteurs 30 et 37 pour ne relier simultanément à la bobine d'asservissement que l'une des deux voies de lecture 51 ou d'asservissement 50. Cette commutation de voie peut être effectuée par deux interrupteurs progressifs pour éviter ainsi des signaux parasites ; ces interrupteurs agissant en sens contraire comme représenté à la figure 9. Le premier a, par exemple, une courbe de réponse 40 et le second une courbe de réponse 41.

Dans le cas d'une piste lisse pure, le dispositif fonctionne exactement comme décrit précédemment, la commutation n'ayant lieu que sur la "postgravure" relue ; en présence des signaux de service 23 du disque de la figure 3, le dispositif fonctionne lors de l'enregistrement de la "postgravure" de deux façons : sur les marques de ces signaux de service de très courte durée, l'interrupteur de la voie asservissement n'est pas commuté ; sur les marques de durée plus longue, la commutation a lieu. En relecture, dans le cas des figures 2 ou 3, la commutation a lieu sur tout élément de "postgravure" et sur les éléments longs des signaux de service éventuellement présents.

La voie d'asservissement représentée sur les figures 10 et 11 comporte dans les deux cas un amplificateur HF 28 et un détecteur d'enveloppe 29. Il n'est donc pas nécessaire d'avoir recours à la voie lecture pour effectuer l'asservissement radial HF.

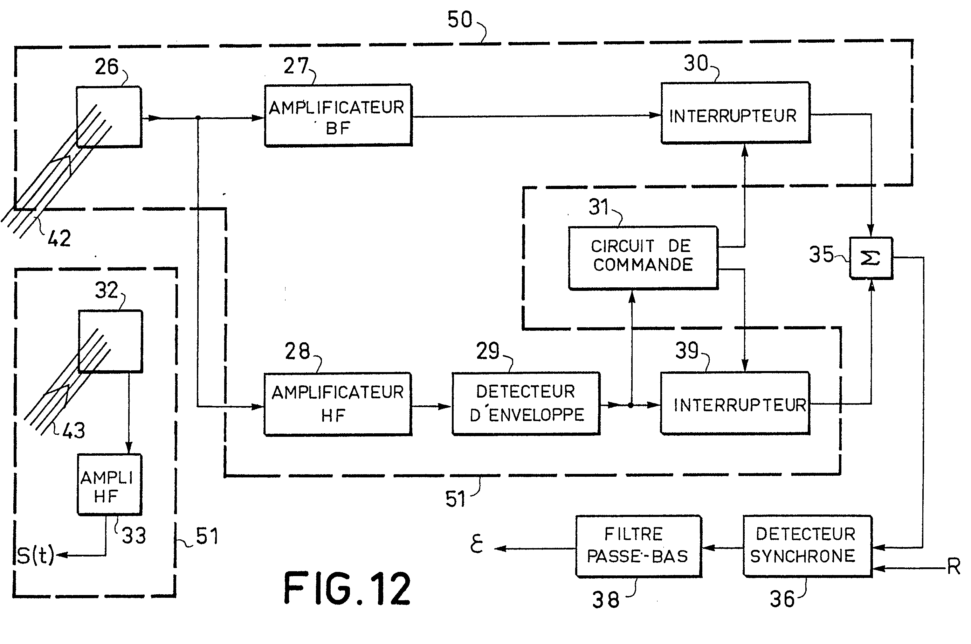

A la figure 12 est représenté un dispositif n'utilisant pour l'asservissement BF ou HF que la voie asservissement : les moyens de détection 26 de la voie asservissement sont suivis de deux branches de traitement qui comportent respectivement l'amplificateur BF 27 d'une part, et l'amplificateur HF 28 et le détecteur d'enveloppe 29 d'autre part ; le circuit de commande 31 agit sur les interrupteurs 30 et 39 situés en sortie des circuits BF et HF de la voie d'asservissement ; les signaux sortant des interrupteurs 30 et 39, qui ne sont pas présents simultanément sauf durant leur commutation, sont dirigés vers l'additionneur 35. Ils subissent alors une détection synchrone 36 et un filtrage passe-bas 38, et fournissent le signal de commande ε du servomécanisme radial. Les moyens de détection 32 et la voie lecture dont ils font partie sont utilisés seulement pour la lecture du signal de "postgravure" et des signaux de service.

La configuration des taches d'énergie radiante, représentée à la figure 4 et susceptible d'utiliser les circuits électrique représentés aux figures 10, 11 et 12, n'a été choisie que pour décrire le fonctionnement du dispositif suivant l'invention.

D'autres configurations des taches sont possibles. Elles sont représentées aux figures 5, 6, 7 et 8.

Dans la configuration représentée à la figure 5 les taches sont alignées, mais les taches de lecture et de gravure sont confondues en une seule tache 24. Dans cette configuration seuls les circuits représentés à la figure 12 sont utilisables.

Dans la configuration représentée à la figure 6 les taches sont alignées, mais la tache de lecture suit la tache de gravure permettant une lecture immédiate et dans de bonnes conditions de la "postgravure" durant son enregistrement. Dans cette configuration seuls les circuits représentés à la figure 12 sont utilisables.

Dans la configuration représentée à la figure 7, les taches sont alignées, mais les taches d'asservissement et de lecture sont confondue en une tache 25a. Dans cette configuration les éléments détecteurs 26 et 32 sont confondus. Les circuits utilisables sont ceux représentés à la figure 12 dans laquelle il faut supprimer la voie 51 et extraire le signal S(t) de l'amplificateur 28.

Dans ces configurations 4, 5, 6 et 7 l'asservissement radial est utilisable quelque soit l'ordre de gravure des différentes positions du disque et quelque soit le comportement optique du disque lors de la gravure.

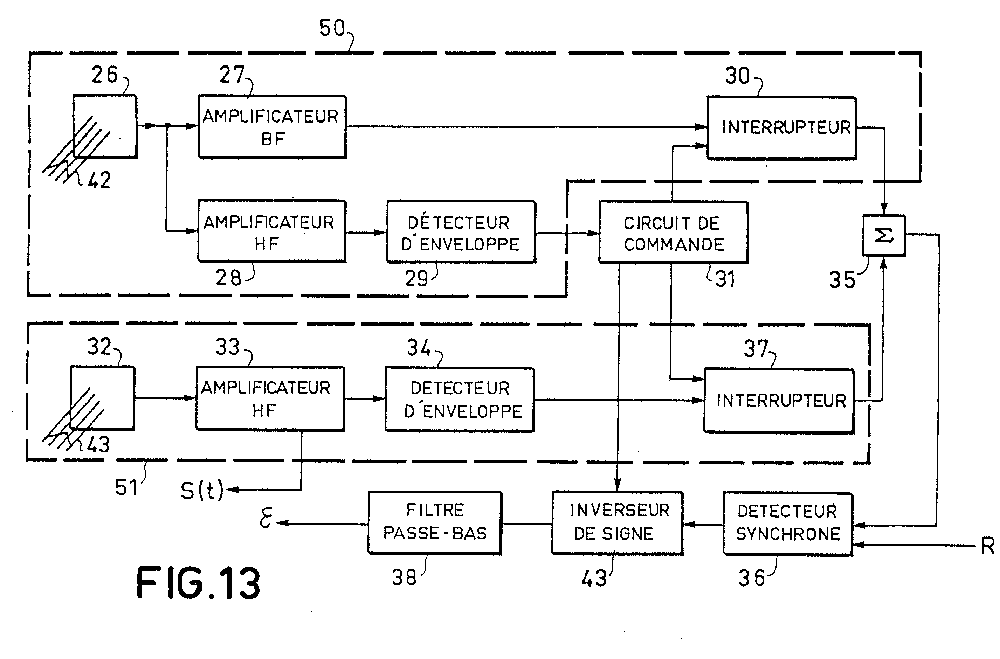

Si l'on admet de ne graver le disque que par séquences jointives continues et si de plus le disque, soit ne porte pas de signaux de service, soit porte des signaux de service placés dans les mêmes directions angulaires du disque quelque soit le tour de piste considéré, il est possible d'utiliser la configuration représentée à la figure 8. Dans cette configuration 8 la tache d'asservissement 25 est décalée d'un demi-pas de piste vers la zone non encore gravée, du disque par rapport à la tache de gravure-lecture 24. La tache d'asservissement ne peut intercepter un signal de "postgravure" qu'en relecture du disque ; en effet lors de la réalisation de la "postgravure" elle ne peut intercepter aucun signal de "postgravure" car elle est située avant la tache de gravure-lecture et de plus elle est décalée vers la zone non encore gravée du disque ; lors de la gravure elle ne détecte, si le disque porte ces signaux, que les signaux de service à la fois du tour de piste en cours de gravure et du tour suivant, mais ces signaux étant angulairement alignés il ne peut se produire de commutation intempestive des voies (voie BF d'asservissement, voie HF d'asservissement ; ou voie asservissement voie lecture) du servomécanisme radial. Dans cette configuration seuls les circuits représentés à la figure 11 sont utilisables ou plutôt le circuit représenté à la figure 11 avec la modification représentée à la figure 13 comme cela sera décrit plus loin.

Toujours dans le cas de la tache d'asservissement décalée d'un demi-pas de piste vers la zone non enregistrée du disque, deux autres configurations existent non représentées ici : tache de lecture et de gravure séparées et alignées sur la piste de "postgravure" avec soit la tache de gravure devant la tache de lecture, soit la tache de lecture devant la tache de gravure, de façon analogue aux configurations représentées aux figures 4 et 6.

Dans les configurations représentées aux figures 4, 5, 6, 7 la voie d'asservissement, ou la voie BF permettent de s'asservir dans la zone non gravée située entre les pistes de prégravure.

Avec une "prégravure" notablement plus étroite que la zone laissée disponible pour la postgravure, on obtient un niveau continu maximal sur la photocellule et donc un niveau maximal de sortie de l'amplificateur BF 27.

Dans une zone de "postgravure" ou de signaux de service, on s'asservit sur la piste de "postgravure" ou des signaux de service ; cela correspond à un niveau maximum de signal HF détecté donc à la sortie du détecteur d'enveloppe 34 ou 29.

11

Dans ces configurations, pour les deux cas d'asservissement radial BF ou HF, on s'asservit sur un maximum du signal et le signal $\varepsilon$ représente bien le signal d'erreur radial.

Dans le cas de la configuration représentée à la figure 8, la voie d'asservissement ou la voie BF permettent de s'asservir sur la piste de "prégravure" située au-delà de la zone à graver. Avec la même hypothèse que précédemment sur la largeur de la piste de "prégravure" on est cette fois dans le cas d'un minimum de signal à la sortie de l'amplificateur BF 27. Dans une zone de "postgravure" ou de signaux de service on se trouve encore avec un maximum de signal à la sortie du détecteur d'enveloppe 34 ou 29. Dans cette configuration, pour les deux cas d'asservissement radial BF ou HF, on s'asservit sur un minimum du signal dans le cas BF et sur un maximum du signal dans le cas HF. Il est donc nécessaire ici d'introduire une inversion de signe du signal de sortie du détecteur synchrone lors de la commutation des deux voies d'asservissement.

Si l'on se reporte à la figure 13, vue modifiée de la figure 11, on peut décrire le fonctionnement suivant. Lorsque le circuit de commande 31 ne reçoit pas d'information du détecteur d'enveloppe 29 l'interrupteur 30 de la voie asservissement est fermé et l'interrupteur 37 de la voie lecture est ouvert, le signal atteignant l'additionneur 35 étant seulement le signal BF ; en même temps l'inverseur de signe 43 est en position "inversion de signe". Lorsque le circuit de commande 31 reçoit un signal d'amplitude et de durée suffisantes du détecteur d'enveloppe 29 il opère simultanément : l'ouverture de l'interrupteur 30, la fermeture de l'interrupteur 37 et le passage de l'inverseur de signe 43 en position "non inversion de signe".

Dans le cas où la piste de "prégravure" 21 présenterait une largeur notablement plus grande que la zone laissée disponible pour la "postgravure", les conditions d'obtention du signal radial, pour les configurations de taches représentées aux figures 4, 5, 6, 7 et 8 devraient être inversées par rapport à la description précédente.

Dans tous les cas considérés la distance entre les taches d'asservissement (A) et de lecture (L) est supposée assez courte pour que l'intervalle de temps qui s'écoule entre les passages de la première et de la seconde au-dessus d'un même point du disque soit inférieur au temps d'intégration du circuit de commande 31.

12

De plus le temps d'intégration du circuit de commande 31 est lui-même supposé d'une part assez court pour que le signal d'erreur éventuellement erronné naissant dans la voie asservissement ou la voie BF durant son utilisation en présence de "postgravure" n'apporte pas de perturbation notable à l'asservissement radial, d'autre part assez long pour éviter des commutations intempestives entre les voies d'asservissement dues à des signaux parasites ou à des signaux issus des signaux de service de courte durée.

Ce qui vient d'être décrit dans le cas d'un système utilisant la wobbulation peut être appliqué à tout autre procédé d'asservissement radial de l'art connu sans changer l'élément fondamental du dispositif. Chacune des deux voies d'asservissement radial peut utiliser soit les procédés de wobbulation du faisceau ou de wobbulation de la piste, soit le système "push-pull", soit tout autre méthode de l'art connu. Dans certains cas les moyens de détection 26 et 32 doivent comporter une cellule, dans d'autre cas deux cellules pour rester conforme aux méthodes de détection de l'écart de piste de l'art connu. La modification apportée à ces méthodes suivant l'invention est de détecter le signal d'écart entre piste et tache de rayonnement à la fois directement en BF et par l'intermédiaire de la HF dont l'enveloppe est détectée, et d'effectuer le choix des deux voies par un circuit de commande actionné par la présence du signal HF.

Le dispositif décrit peut être utilisé pour l'enregistrement de signaux de télévision en continu ou séquence par séquence ou même image par image et pour leur relecture. Il peut aussi être utilisé pour l'enregistrement de données numériques par blocs de courte ou grande longueur dans un ordre quelconque, et pour leur relecture.

REVENDICATIONS

1. Dispositif d'enregistrement-lecture d'informations utilisant un support mobile (1) d'informations comportant une piste prégravée (21) sur laquelle sont enregistrés des signaux d'asservissement radial et au moins une deuxième piste (22) parallèle à cette première piste, cette deuxième piste (22) étant destinée à enregistrer des signaux d'informations, caractérisé en ce qu'il comprend au moins un moyen de détection de piste permettant de lire la piste prégravée (21) et la deuxième piste (22), un moyen de commutation commandé par l'existence de signaux présents sur cette deuxième piste (22) sélectionnant les signaux délivrés par les moyens de détection de piste lors de la détection des signaux présents sur cette deuxième piste (22), lesdits signaux sélectionnés étant transmis aux moyens d'asservissement radial d'un ensemble d'enregistrement-lecture desdits signaux d'informations.

2. Dispositif suivant la revendication 1, caractérisé en ce qu'il comprend deux moyens de détection suivis chacun d'une voie (50, 51) de traitement, la première (50) de ces voies comportant deux branches séparées véhiculant respectivement les signaux traités en fonction de leur provenance de la piste prégravée (21) ou de la deuxième piste (22), ces signaux étant différentiables, ces deux voies permettant d'obtenir le signal d'asservissement radial.

3. Dispositif suivant la revendication 1, caractérisé en ce qu'il comprend deux moyens de détection suivis chacun d'une voie (50, 51) de traitement, la première (50) de ces voies comportant deux branches véhiculant respectivement les signaux traités en fonction de leur provenance de la piste prégravée (21) ou de la deuxième piste (22), ces signaux étant différentiables, la première de ces voies seule permettant d'obtenir le signal d'asservissement radial.

4. Dispositif suivant la revendication 1, caractérisé en ce qu'il comprend un seul moyen de détection suivi d'une première voie (50) de traitement comportant deux branches séparées véhiculant respectivement les signaux traités en fonction de leur fréquence, cette voie permettant d'obtenir le signal d'asservissement radial.

5. Dispositif suivant l'une quelconque des revendications précédentes, caractérisé en ce que le premier moyen de détection de piste comporte un élément détecteur suivi sur une voie d'un circuit amplificateur (27) des signaux détectés et sur l'autre voie d'un circuit amplificateur (28) des signaux détectés et d'un circuit détecteur d'enveloppe (29).

6. Dispositif suivant l'une quelconque des revendications précédentes, caractérisé en ce que le deuxième moyen de détection comporte un élément détecteur suivi d'un circuit amplificateur (33) des signaux détectés et d'un circuit détecteur d'enveloppe (34).

7. Dispositif suivant la revendication 1, caractérisé en ce que ce support (1) est un disque dont l'une des faces au moins porte des informations.

8. Dispositif suivant la revendication 1, caractérisé en ce que la piste prégravée (21) est une piste lisse continue.

9. Dispositif suivant la revendication 1, caractérisé en ce que les moyens d'asservissement radial comportent un détecteur synchrone (36) recevant le signal issu d'un circuit additionneur (35) sur lequel sont entrés simultanément l'un des signaux provenant des moyens de détection de piste et un signal référence de détection synchrone ; ce détecteur synchrone (36) étant suivi d'un filtre passe-bas (38) fournissant un signal ε constituant le signal d'erreur représentatif de l'erreur radiale de l'ensemble d'enregistrement-lecture.

10. Dispositif suivant l'une quelconque des revendications 2, 3 ou 4, caractérisé en ce qu'il comprend un premier interrupteur (30) disposé sur la première branche de la première voie (50) de traitement des signaux sortant du premier moyen de détection de piste.

11. Dispositif suivant l'une quelconque des revendications 3 ou 4, caractérisé en ce qu'il comprend un premier interrupteur (30) disposé sur la première branche de la première voie (50) de traitement des signaux sortant du premier moyen de détection de piste et un deuxième interrupteur (39) disposé sur la deuxième branche de la première voie (50) de traitement.

12. Dispositif suivant la revendication 2, caractérisé en ce qu'il comprend un premier interrupteur (30) disposé sur la première branche de la première voie (50) de traitement des signaux sortant du premir moyen de

15

détection de piste et un deuxième interrupteur (37) disposé sur la deuxième voie (51) de traitement.

13. Dispositif suivant l'une quelconque des revendications 11 ou 12, caractérisé en ce que le premier (30) et le deuxième interrupteur sont commandés en opposition de phase.

14. Dispositif suivant la revendication 13, caractérisé en ce que la commande de commutation de ces interrupteurs se fait de façon progressive et symétrique.

15. Dispositif suivant l'une quelconque des revendications précédentes, caractérisé en ce que le support mobile est lisible par voie optique.

16. Dispositif suivant l'une quelconque des revendications précédentes, caractérisé en ce qu'il comprend des moyens de focalisation projetant sur le support mobile (1) au moins une tache détectée par des premiers moyens détecteurs.

17. Dispositif suivant la revendication 16, caractérisé en ce que ces taches sont alignées par rapport à la direction des pistes.

18. Dispositif suivant la revendication 16, caractérisé en ce que la première tache est décalé d'un demi-pas de piste par rapport à la direction des pistes, vis-à-vis de l'autre ou des autres taches.

19. Dispositif suivant la revendication 1, caractérisé en ce que les moyens d'asservissement comportent un faisceau focalisé sur l'une des deuxièmes pistes en une tache qui par son bord atteint les premières pistes adjacentes.

20. Dispositif suivant la revendication 1, caractérisé en ce que les moyens d'asservissement comportent un faisceau focalisé sur l'une des premières pistes en une tache qui par son bord atteint les deuxièmes pistes adjacentes.

FIG.1

# FIG.2

21    22

# FIG.3

21    23    22

# FIG.4

21 {

G      L      A

42

24a      24b      25      20

# FIG.5

21 {

G-L      A

42

24      25      20

# FIG.6

21 {

L      G      A

42

24b      24a      25      20

# FIG.7

21 {

G      A-L

42

24a      25a      20

# FIG. 8

# FIG. 9

FIG.10

0064438

FIG.11

FIG.12

7/8

0064438

FIG.13

**Office européen des brevets**

**RAPPORT DE RECHERCHE EUROPEENNE**

Numéro de la demande

EP 82 40 0694

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl. ³) |
|---|---|---|---|
| A | FR-A-2 420 183 (PHILIPS) <br><br> * page 10, ligne 1 - page 26, ligne 8; figures * <br><br> --- | 1,2,5-7,15,16,18 | G 11 B 7/08 <br> G 11 B 7/00 |
| A | DE-A-2 634 243 (ROBERT BOSCH GmbH) <br><br> * page 9, lignes 9-21; page 10, lignes 1-4 * & US - A - 4 167 024 <br><br> --- | 1-3,7,9,15,18,20 | |
| A | FR-A-2 312 091 (PHILIPS) <br><br> * page 2, lignes 1-13; page 3, ligne 28 - page 4, ligne 9; page 5, ligne 35 - page 7, ligne 15; page 13, ligne 3 - page 16, ligne 30 * <br><br> --- | 1,2,7,8,15,16 | |
| A | EP-A-0 019 378 (XEROX CORP.) <br><br> * page 3, ligne 8 - page 8, ligne 31 * <br><br> --- | 1,7,15,16 | DOMAINES TECHNIQUES RECHERCHES (Int. Cl. ³) <br><br> G 11 B |
| A | PATENT ABSTRACTS OF JAPAN, vol.4, no.39, (P-4) [521], 28 mars 1980, page 145 P 4 & JP - A - 55 12 594 (TEIATSUKU K.K.) (29-01-1980) * abrégé * <br><br> --- | 1,7,8,15,18 | |

Le présent rapport de recherche a ete etabli pour toutes les revendications

| Lieu de la recherche <br> LA HAYE | Date d'achèvement de la recherche <br> 03-08-1982 | Examinateur <br> DAALMANS F.J. |
|---|---|---|

CATEGORIE DES DOCUMENTS CITES

X : particulièrement pertinent à lui seul
Y : particulièrement pertinent en combinaison avec un autre document de la même categorie
A : arrière-plan technologique
O : divulgation non-ecrite
P : document intercalaire

T : théorie ou principe à la base de l'invention
E : document de brevet antérieur, mais publié à la date de dépôt ou apres cette date
D : cité dans la demande
L : cité pour d'autres raisons

& : membre de la même famille, document correspondant

OEB Form 1503 03 82

# 0064438

Numéro de la demande

**RAPPORT DE RECHERCHE EUROPEENNE**

Office européen
des brevets

EP   82 40 0694

Page   2

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int. Cl. ³) |
|-----------|-------------------------------------------------------------------------------|------------------------|---------------------------------------|
| A | FR-A-2 217 761  (PHILIPS)<br><br>* page 3, lignes 3-13; page 4, lignes 2-23; page 5, ligne 33 - page 6, ligne 25; revendications 1,4,5,7 * | 1,7,8, 15,18 | |
| A | GB-A-2 058 434  (PHILIPS) (08-04-1981)<br>* page 11, lignes 31-65; page 11, lignes 10-15; page 13, lignes 103-121; figure 17 * & FR - A - 2 464 532 (06-03-1981) | 1,7,15 | |
| A | DE-A-3 020 855  (MITSUBISHI DENKI K.K.) | 1 | |
| A | FR-A-2 312 087  (PHILIPS) | 1 | *DOMAINES TECHNIQUES RECHERCHES (Int. Cl. ³)* |
| A | FR-A-2 286 465  (MCA DISCO-VISION INC.) | 9 | |
| A | US-A-3 919 697  (WALKER) | 1 | |

- - - - -

Le present rapport de recherche a été établi pour toutes les revendications

| Lieu de la recherche<br>**LA HAYE** | Date d'achevement de la recherche<br>**03-08-1982** | Examinateur<br>**DAALMANS F.J.** |
|---|---|---|